# EUROPÄISCHE PATENTSCHRIFT

(11) **EP 2 296 873 B1**
(45) Veröffentlichungstag und Bekanntmachung des Hinweises auf die Patenterteilung: **12.08.2015**
(21) Anmeldenummer: 09731704.4
(22) Anmeldetag: 20.02.2009
(51) Int. Cl.: B32B 3/12, B32B 3/28, B32B 38/10

(54) **VERFAHREN ZUR HERSTELLUNG EINES BEIDSEITIG MIT DECKSCHICHTEN VERSEHENEN KERNVERBUNDES**
METHOD FOR PRODUCING A CORE COMPOSITE WITH DOUBLE-SIDED SURFACE LAYERS
PROCEDE DE FABRICATION D'UNE STRUCTURE SANDWICH POURVUE DE COUCHES DE RECOUVREMENT SUR LES DEUX COTES

(30) Priorität: 15.04.2008 DE 102008019070
(43) Veröffentlichungstag der Anmeldung: 23.03.2011
(73) Patentinhaber: Airbus Operations GmbH, 21129 Hamburg (DE)
(72) Erfinder: KOLAX, Michael, 21147 Hamburg (DE); DOLZINSKI, Wolf-Dietrich, 27777 Ganderkeese (DE)
(74) Vertreter: UEXKÜLL & STOLBERG
(86) Internationale Anmeldenummer: PCT/EP2009/052031
(87) Internationale Veröffentlichungsnummer: WO 2009/127460

(56) Entgegenhaltungen:
- DE-A1-102004 013 145
- DE-A1-102006 050 823
- "Technologie du préimprégné" Dezember 1995 (1995-12), CIBA , XP002527371 Seite 20 - Seite 21

## Beschreibung

Die Erfindung betrifft ein Verfahren zur Herstellung eines Kernverbundes mit einem beidseitig mit Deckschichten versehenen Faltwabenkern, wobei der Faltwabenkern parallel zu den Deckschichten verlaufende drainagefähige Kanäle aufweist.

Im Flugzeugbau werden vereinzelt CFK-Sandwich-Rumpfzellen im Wickelverfahren hergestellt. Die hierfür eingesetzten Kernverbunde sind mit honigwabenförmigen Kernen mit kleinvolumigen Zellen gebildet, um eine Einbeulung der aufgebrachten Decklagen im Bereich der Waben und hierdurch bedingte, insbesondere strukturelle, aerodynamische und optische Defizite zu vermeiden.

Derartige kleinzellige Honigwabenkerne sind zum Wickeln von einstückigen Rumpfsektionen für moderne Großpassagierflugzeuge nicht geeignet. Zum einen fehlt es an der Drainagefähigkeit der eingesetzten Honigwabenkerne. Dadurch kann in den Kernverbund eindringendes und/oder innerhalb des Kernverbundes entstehendes Kondenswasser zu erheblichen Schäden, zum Beispiel durch Gefrierprozesse in großen Flughöhen, führen, die die strukturelle Festigkeit im alltäglichen Flugbetrieb signifikant beeinträchtigen können und somit ein unvertretbares Sicherheitsrisiko darstellen. Zum anderen wirken die kleinvolumigen Zellenstrukturen der Honigwabenkerne gewichtserhöhend. Darüber hinaus lassen sich mit Honigwabenkernen in Bezug auf parallel zu den Deckschichten angreifende Lasten nur schwer anisotrope Eigenschaften einstellen, so dass eine lastflussgerechte Ausgestaltung der konventionell mit Honigwabenkernen gebildeten Kernverbunde, wenn überhaupt nur in sehr engen Grenzen möglich ist.

Abhilfe können hier drainagefähige Faltwabenkerne mit durchgehenden Kanälen schaffen. Durch die Kanäle ist eine schnelle und sichere Abführung von Wasser gewährleistet. Ferner erlaubt der beispielsweise trapezförmige oder zickzackförmige Verlauf der Kanäle eine im Vergleich zu Honigwabenkernen im Hinblick auf den Lastfluss verbesserte Ausgestaltung der Faltwabenkerne. Darüber hinaus lassen sich solche Faltwabenkerne einfach oder zweifach gekrümmt ausgestalten, so dass grundsätzlich vollständige Rumpfsektionen oder zumindest Schalensegmente zum Zusammenfügen von Rumpfsektionen unter Bildung von mehreren Längsnähten herstellbar sind.

Derartige Faltwabenkerne lassen sich jedoch nur schlecht Bewickeln und/oder mit Deckschichten belegen, da hierbei keine zumindest abschnittsweise stetig gekrümmten Oberflächen, sondern eine eine Vielzahl von multifraktionellen Polygonzügen aufweisende Oberflächengeometrie entsteht. Kernverbunde mit einer derartigen unstetigen Oberflächengeometrie sind jedoch für die Außenhaut einer Rumpfsektion eines Flugzeugs aus vielerlei Gründen nicht einsetzbar. Denn Oberflächen mit Kanten verschlechtern insbesondere die aerodynamischen Eigenschaften des mit diesem Kernverbund hergestellten Bauteils und führen zudem im Vergleich zu glatten Strukturen zu einer erheblich verringerten mechanischen Strukturbelastbarkeit.

Aus der nachveröffentlichten DE 10 2006 050 823 A1 ist ein Verbundteil bekannt, das durch Aufbringen mindestens einer Faserschicht auf eine Trägerstruktur, Einbringen eines Füllmittels in mindestens einen Hohlraum der Trägerstruktur, Injizieren eines Matrixmaterials in die Faserschicht, Aushärten der faserverstärkten Schicht und Entfernen des Füllmittels aus dem mindestens einen Hohlraum hergestellt wird.

Aus der DE 10 2005 016 654 A1 ist ein Sandwichelement zur schallabsorbierenden Innenverkleidung mit einer dreidimensional ausgebildeten Kernstruktur zwischen zwei Deckschichten bekannt, bei dem die Kernstruktur und/oder die Deckschicht zumindest bereichsweise Durchgänge zur Schalltransmission aufweist, wobei im Bereich mindestens einer Deckschicht zumindest bereichsweise eine Schallabsorptionsschicht angeordnet ist.

Aus der DE 10 2006 056 353 B3 ist ein Verfahren zur Herstellung einer Faltwabenstruktur für einen Kernverbund bekannt, das die Schritte aufweist: Bereitstellen eines Flächenmaterials, das eine Erweichungstemperatur aufweist, lokales Erwärmen des Flächenmaterials im Bereich vorbestimmter Faltlinien auf mindestens die Erweichungstemperatur und Falten des Flächenmaterials entlang des erwärmten Bereichs der Faltlinien in die Faltwabenstruktur.

Aus DE 843 890 B ist ein plattenförmiger Hohlbaukörper mit mehreren Längswänden und Querstegen aus geschichtetem, wärmehärtbaren Harz enthaltendem Faserstoff bekannt, wobei jeder Quersteg wenigstens einem von mehreren Kanälen oder Hohlräume aufweisenden Körpern angehört, die aus gefaltetem oder gewickeltem Faserstoff bestehen und mit dem Längswänden mittels wärmehärtbaren Harzes verbunden sind, und bei der Herstellung die geschichteten Längswände und Querstege während der Wärmeeinwirkung einem Druck in ihren Dickenrichtungen unterworfen worden sind, so dass ein verdichtetes starres und homogenes Ganzes entstanden ist.

Aus DE 10 2004 013 145 ist ein Verfahren zur Herstellung eines Kernverbundes mit einem beidseitig mit Deckschichten versehenen Faltwabenkern bekannt, der parallel zu den Deckschichten verlaufende drainagefähige Kanäle aufweist. Bei dem Verfahren wir eine untere Decksicht auf einem Werkzeug angeordnet, zumindest bereichsweise eine Kernfüllmasse in den Faltwabenkern eingebracht, der Faltwabenkern auf der unteren Deckschicht angeordnet, zur Schaffung einer oberen Deckschicht Material auf dem Faltwabenkern angeordnet und der gesamte Kernverbund unter Anwendung von Druck und/oder Temperatur ausgehärtet.

Aufgabe der Erfindung ist es daher, ein Verfahren zur Herstellung eines Kernverbundes anzugeben, das die vorstehend bezeichneten Nachteile nicht aufweist.

Diese Aufgabe wird durch ein Verfahren nach Anspruch 1 gelöst. Bevorzugte Ausführungsformen des Verfahrens sind Gegenstand der Unteransprüche.

Das erfindungsgemäße Verfahren weist die nachfolgenden Schritte auf:
a) Anordnen einer mit einem nassen Prepreg-Material gebildeten unteren Deckschicht auf einem Werkzeug,
b) zumindest bereichsweises Einbringen einer Kernfüllmasse in den Faltwabenkern,
c) Anordnen des mindestens einen Faltwabenkerns auf der unteren Deckschicht,
d) Anordnen des Prepreg-Materials auf dem Faltwabenkern zur Schaffung einer oberen Deckschicht,
e) Aushärten des gesamten Kernverbundes unter Anwendung von Druck und/oder Temperatur, und
f) Entfernen der Kernfüllmasse.

Im Verfahrensschritt a) wird ein "nasses", das heißt eine mit einem aushärtbaren Kunststoffmaterial durchtränkte, vorimprägnierte Verstärkungsfaseranordnung, so genanntes "Prepreg"-Material, auf einem Werkzeug zur Bildung einer unteren Deckschicht des späteren Kernverbundes in Abhängigkeit von der Werkzeuggeometrie angeordnet bzw. abgelegt oder abgewickelt. Durch die Oberflächengeometrie des Werkzeuges wird hierbei die Form des späteren Kernverbundes vorgegeben. Die Reihenfolge der Schritte a) und b) kann gegebenenfalls auch vertauscht werden. Als Prepreg-Material kann beispielsweise ein mit einem aushärtbaren Epoxidharz infiltriertes Kohlefasergewebe, Kohlefasergestrick oder Kohlefasergelege eingesetzt werden, das eine bandförmige oder bahnförmige geometrische Gestalt aufweisen kann.

Im Anschluss daran oder vorab erfolgt im Schritt b) ein zumindest bereichsweiser Eintrag einer Kernfüllmasse in den Faltwabenkern. Hierdurch wird erreicht, dass das auf dem Faltwabenkern ein- oder beidseitig zur Schaffung der Deckschichten aufgebrachte Prepreg-Material nicht in die großvolumigen, durchgehenden Kanäle (Kavitäten) des Faltwabenkerns unter Muldenbildung hineingezogen (so genanntes "telegraphing") wird, so dass der spätere Kernverbund in aerodynamischer, statischer und optischer Hinsicht ideale, das heißt vor allem glatte, stetig gekrümmte (polygonfreie) Oberflächen aufweist.

Im Verfahrensschritt c) wird der mindestens eine Faltwabenkern auf der unteren, bereits auf dem Werkzeug abgelegten Deckschicht platziert. Der Faltwabenkern weist im Gegensatz zu herkömmlichen Honigwabenkernen keine geschlossenzelligen Wiederholungseinheiten, sondern durchgehende Kanäle auf. Diese durchgehenden Kanäle können beispielsweise einen zickzackförmigen, kurvenförmigen oder trapezförmigen Verlauf aufweisen und ermöglichen die Drainagefähigkeit des Kerns. Durch geschickte Faltung von anfänglich ebenen Zuschnitten kann der Faltwabenkern eine einfache oder zweifache Krümmung aufweisen, so dass der Faltwabenkern in idealer Weise an eine vorgegebene Oberflächengeometrie einer Flugzeugrumpfzelle anpassbar ist. Der Faltwabenkern kann mit beliebigen Verstärkungsfaseranordnungen oder Papieren hergestellt sein, die mit einem duroplastischen (aushärtbaren) Kunststoffmaterial imprägniert (durchtränkt, infiltriert) sind, das zum Zeitpunkt der verfahrensgemäßen Verwendung bereits vollständig ausgehärtet ist, um die notwendige Eigensteifigkeit während der Verarbeitung zu gewährleisten. Der Faltwabenkern zur Durchführung des vorliegenden Verfahrens kann beispielsweise mit dem bekannten Nomex^{®}-Papier oder einem anderen, mit einem geeigneten Epoxidharz, Phenolharz oder Polyesterharz infiltrierten Kohlefasergewebe, Kohlefasergelege oder Glasfasergewebe hergestellt sein. Alternativ kann der Faltwabenkern auch mit Metallfolien gebildet sein.

Darüber hinaus ist es möglich, den Faltwabenkern zunächst frei von jeglicher Kernfüllmasse auf der unteren Deckschicht zu platzieren und dann die Kernfüllmasse zumindest bereichsweise in die noch zugängliche Oberseite des Faltwabenkerns einzubringen. Für den Fall, dass als Werkzeug ein rotierender Wickeldorn ("male"-Werkzeug) Verwendung findet, kann die Kernfüllmasse mittels eines an den rotierenden Faltwabenkern herangeführten Spachtels mit integrierter Dosiereinrichtung für die Füllmasse eingetragen und glattgezogen werden. Nach dem Erhärten der Kernfüllmasse folgt dann der Verfahrensschritt d).

Im Verfahrensschritt d) wird weiteres Prepreg-Material auf dem Faltwabenkern zur Schaffung einer oberen Deckschicht des Kernverbundes angeordnet. Das Prepreg-Material kann in der Form von schmalen Bändern oder als ein breites bahnförmiges Halbzeug verarbeitet werden. Im Falle eines rotierenden Wickeldorns als Werkzeug kann das dann vorzugsweise bandförmige Prepreg-Material lagenweise auf den sich drehenden Faltwabenkern aufgewickelt werden. Infolge der Kernfüllmasse ist eine polygonfreie Ablage zumindest der oberen Deckschicht gewährleistet.

Im Verfahrensschritt e) erfolgt die abschließende Aushärtung des gesamten Kernverbundes unter Verwendung bekannter Aushärtungsprozeduren durch die Anwendung von Druck und/oder Temperatur.

Im letzten Verfahrensschritt f) wird die Kernform vollständig aus dem Faltwabenkern entfernt, um das Gewicht des fertigen Kernverbundes zu verringern und die Drainagefähigkeit wieder herzustellen. Wird als Kernfüllmasse beispielsweise das Material "Aqua-Core^{®}" eingesetzt, kann die erhärtete Kernfüllmasse einfach mit Wasser als Lösungsmittel vollständig aus dem drainagefähigen Faltwabenkern herausgespült werden. Grundsätzlich können als Kernfüllmasse auch bei geeigneter Temperatur schmelzende Wachse und/oder Metalllegierungen eingesetzt werden.

Nach einer vorteilhaften Ausgestaltung des Verfahrens werden die untere und/oder die obere Deckschicht mit einem Klebemittel mit dem Faltwabenkern zumindest bereichsweise verklebt.

Hierdurch wird eine Ablösung der Deckschichten vom Faltwabenkern verhindert und die Schadenstoleranz sowie die Lasttragfähigkeit des Kernverbundes erhöht. Diese Vorgehensweise kann erforderlich sein, wenn die Durchtränkung des für die Herstellung der Deckschichten verwendeten "Prepreg"-Materials mit einem aushärtbaren Kunststoffmaterial (Duroplast), insbesondere Epoxidharz, einem Polyesterharz, einem Phenolharz oder einem BMI-Harz für eine hinreichend belastbare adhäsive Anbindung der Deckschichten an den Faltwabenkern nicht ausreichend sein sollte.

Gemäß einer weiteren Ausgestaltung des erfindungsgemäßen Verfahrens ist vorgesehen, dass eine Oberseite und/oder eine Unterseite des Faltwabenkerns derart mit der Kernfüllmasse aufgefüllt und geformt wird, dass sich eine polygonfreie Außen- und Innenkontur der darauf angeordneten späteren Deckschichten des Kernverbundes ergibt.

Hierdurch wird eine kantenfreie Oberseite und/oder Unterseite des späteren Kernverbundes erreicht, die über optimale strukturmechanische und aerodynamische sowie ästhetische Eigenschaften verfügt. Somit kann der erfindungsgemäß hergestellte Kernverbund ohne das Erfordernis zusätzlicher und unter Umständen gewichtserhöhender Nachbearbeitungsschritte, wie Spachteln, Schleifen etc. unmittelbar für die Herstellung von Rumpfsektionen oder anderen Primärstrukturteilen von Flugzeugen eingesetzt werden.

Die zur Erlangung von glatten bzw. stetigen Ober- und Unterseiten des Kernverbundes erforderliche Formung der eingebrachten Kernfüllmasse kann beispielsweise durch - je nach der gewünschten Geometrie des Kernverbundes - ebene sowie einfach oder sphärisch (zweifach) gekrümmte Andruckplatten bzw. Werkzeuge erfolgen. Weiterhin ist es möglich, die bereits geringfügig angezogene Kernfüllmasse durch ein geeignetes Abziehwerkzeug zu glätten und zu formen, wobei diese Methode insbesondere bei einem auf einem rotierenden Wickeldorn bereits aufliegenden Faltwabenkern in vorteilhafter Weise angewendet werden kann.

Gemäß einer weiteren vorteilhaften Weiterbildung ist vorgesehen, dass das Werkzeug ein rotierender Wickeldorn ist, auf dem das Prepreg-Material zur Bildung mindestens einer Deckschicht lagenweise abgewickelt wird.

Hierdurch wird es möglich, eine vollständige Rumpfsektion für ein großes Flugzeug einstückig mit einem Kernverbund unter Verwendung des drainagefähigen Faltwabenkerns herzustellen. In diesem Fall ist in der Regel die Verwendung mehrerer aneinander stoßender, vorgefertigter Faltwabenkerne mit einer entsprechenden Eigenkrümmung empfehlenswert, die an den Nahtstellen zur Erzielung einer mechanischen Verbindung verspleißt werden.

Alternativ kann das für die Durchführung des Verfahrens eingesetzte Werkzeug auch eine ebene, eine eindimensional oder auch zweidimensional gekrümmte Oberflächengeometrie (sphärisch gekrümmt oder einachsig gekrümmt) aufweisen. In diesem Fall lässt sich beispielsweise ein Schalensegment für eine Rumpfsektion eines Flugzeugs oder ein plattenförmiges Bauteil herstellen. Die Flugzeugrumpfsektion wird dann wie im Fall der konventionellen Aluminiumbauweise im Flugzeugbau aus mehreren Schalensegmenten unter Bildung von Längsnähten zusammengefügt.

Eine weitere Fortbildung des Verfahrens sieht vor, dass dem Kernverbund mittels des Werkzeugs eine schalensegmentförmige Geometrie für die Herstellung einer Rumpfsektion verliehen wird.

Durch das ebene, einfach oder zweifach (sphärisch) gekrümmte Werkzeug lassen sich mittels des Verfahrens Schalensegmente für die Herstellung von Flugzeugrumpfsektionen als Kernverbund herstellen, wobei die jeweiligen Rumpfsektionen anschließend durch das Zusammenfügen mehrerer Schalensegmente unter Bildung von Längsnähten hergestellt werden. Mit ebenen Werkzeugen lassen sich gegebenenfalls auch plattenförmige, nicht gekrümmte Kernverbunde mit dem Verfahren fertigen..

Weitere Merkmale und Vorteile der Erfindung ergeben sich aus der folgenden Beschreibung von bevorzugten Ausführungsbeispielen, bei der Bezug genommen wird auf die beigefügte Zeichnung.
Fig. 1 zeigt schematisch in perspektivischer Ansicht einen nach dem erfindungsgemäßen Verfahren hergestellten Kernverbund mit einem Faltwabenkern.
Fig. 2 bis 5 zeigen jeweils schematisch eine Ausführungsform des erfindungsgemäßen Verfahrensablaufs.

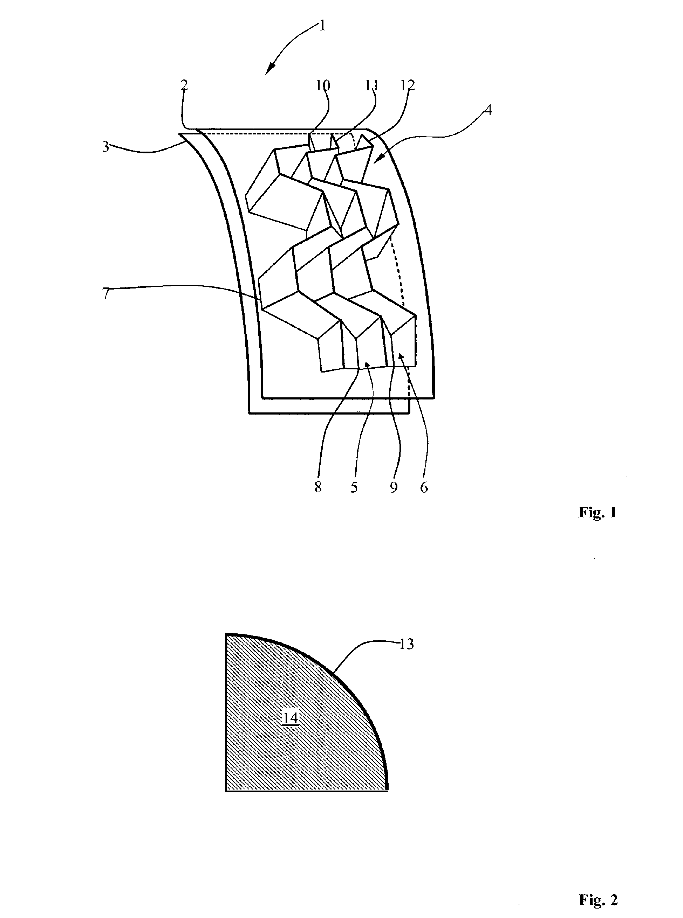

Fig. 1 zeigt einen nach Maßgabe des erfindungsgemäßen Verfahrens gefertigten Kernverbund mit Sandwichaufbau, der eine Krümmung in einer Richtung des Raumes aufweist. Die beiden, den Faltwabenkern beidseitig bedeckenden Deckschichten sind lediglich im Umriss, im übrigen jedoch transparent angedeutet, um den Blick auf den inneren Aufbau des Faltwabenkerns freizugeben.

Ein Kernverbund 1 verfügt über eine obere Deckschicht 2 und eine untere Deckschicht 3, zwischen denen ein Faltwabenkern 4 angeordnet ist. Sowohl die Deckschichten 2, 3 als auch der Faltwabenkern 4 sind in einer Richtung des Raumes gekrümmt. Grundsätzlich lassen sich mit dem Verfahren ebene, einfach oder zweifach (spährisch) gekrümmte Kernverbunde mit einer außerordentlich hohen Lasttragfähigkeit fertigen. Der Faltwabenkern 4 verfügt über eine Vielzahl von parallel angeordneten, durchgehenden und trapezförmig verlaufenden (Drainage-) Kanälen 5, 6. Die Kanäle 5, 6 werden durch die Basislinien 7 bis 9 sowie die Scheitellinien 10 bis 12 begrenzt, die gleichfalls einen trapezförmigen Verlauf zeigen. Grundsätzlich können die Kanäle 5, 6 auch einen in etwa rechteckförmigen, trapezförmigen oder gewellten (sinusförmigen) Verlauf haben.

Anhand der Fig. 2 bis 5, auf die im weiteren Fortgang der Beschreibung zugleich Bezug genommen wird, soll der Ablauf des Herstellungsverfahrens näher erläutert werden.

Zunächst wird ausweislich der Fig. 2 im Schritt a) eine untere, noch "nasse" Deckschicht 13 auf ein Werkzeug 14 aufgebracht. Die untere Deckschicht 13 wird mit einer beliebigen, mit einem aushärtbaren Kunststoffmaterial vorimprägnierten Verstärkungsfaseranordnung, zum Beispiel einem mit einem Epoxidharz durchtränkten Kohlefasergewebe oder Kohlefasergelege ("Prepreg"-Material) gebildet. Dieses "Prepreg"-Material kann bahnförmig auf dem Werkzeug 14 abgelegt oder im Fall eines sich drehenden, dann im Wesentlichen rotationssymmetrischen Werkzeugs 14 auch auf dieses aufgewickelt werden. Im Fall eines hinreichend schmalen bandförmigen "Prepreg"-Materials kann dieses auch im TFP- (Tailored Fibre Placement-) Ablageprozess abgelegt werden. Die Oberflächengeometrie des Werkzeugs 14 definiert zumindest die innere Formgebung des späteren Kernverbundes.

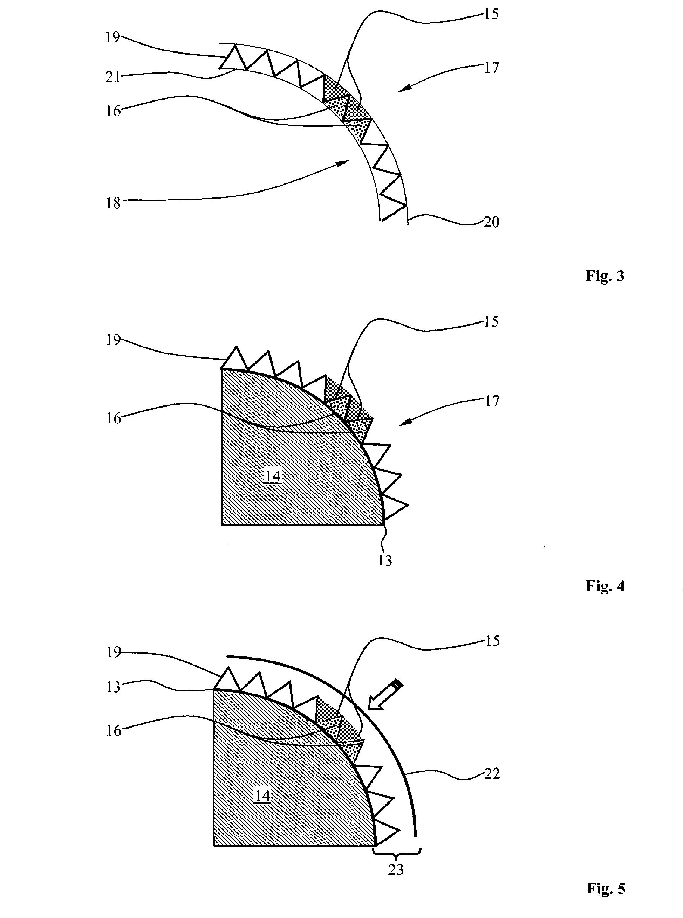

In einem weiteren Verfahrensschritt b) (vgl. Fig. 3) wird eine entfernbare Kernfüllmasse 15, 16 sowohl in eine Oberseite 17 als auch in eine Unterseite 18 eines Faltwabenkerns 19 eingebracht, wobei der Faltwabenkern 19 bereits herstellerseitig so vorgeformt ist, dass er einer vorgegebenen Sollgeometrie des späteren Kernverbundbauteils entspricht. Hierbei ist zu berücksichtigen, dass eine Außenkontur 20 und eine Innenkontur 21 stetig gekrümmt (d.h. glatt) und polygonfrei der gewünschten Sollgeometrie des herzustellenden, späteren Kernverbundes folgt. Die Kernfüllmasse 15, 16 ist durch ein Lösungsmittel oder gegebenenfalls durch Schmelzen wieder aus dem Faltwabenkern 19 entfernbar.

Der zumindest bereichsweise Eintrag der Kernfüllmasse 15, 16 in eine oder beide Seiten des Faltwabenkerns 19 kann zum Beispiel durch das Abziehen der noch nicht vollständig erhärteten Kernfüllmasse 15, 16 mit einem geeigneten Werkzeug erfolgen. Als Kernfüllmasse 15, 16 kann beispielsweise das wasserlösliche Material "AquaCore^{®}" eingesetzt werden. Durch die Kernfüllmasse 15, 16 wird ein Hineinziehen (so genanntes "telegraphing") der Deckschichten in die relativ großvolumigen, durchgehenden Kanäle des Faltwabenkerns 19 verhindert. Hierdurch ergeben sich im Hinblick auf die erreichbare statische Festigkeit, die aerodynamischen Eigenschaften sowie die äußere optische Erscheinung der beiden Seiten des späteren Kernverbundes optimale Eigenschaften.

Im Schritt c) wird, wie in Fig. 4 dargestellt, mindestens ein im Schritt b) präparierter bzw. vorbereiteter Faltwabenkern 19 auf der unteren, bereits auf dem Werkzeug 14 abgelegten Deckschicht 13 platziert.

Alternativ kann bei einer Beschränkung des Eintrags der Kernfüllmasse 15, 16 auf die Oberseite des Faltwabenkerns 19, die zumindest bereichsweise Einbringung sowie die Kontur- bzw. Formgebung der Kernfüllmasse 15, 16 auch erst im Zuge dieses Verfahrensschrittes erfolgen.

Im Schritt d) wird, wie in Fig. 5 gezeigt, eine zweite, obere Deckschicht 22 zur Schaffung eines vollständigen Kernverbundes 23 auf dem Faltwabenkern 19 angeordnet. Auch die obere Deckschicht 22 wird mit einem geeigneten nassen "Prepreg"-Material durch Ablegen oder Aufwickeln - ein entsprechendes Werkzeug 14 vorausgesetzt - hergestellt.

Nach Maßgabe des Verfahrensschrittes e) erfolgt die Aushärtung des Kernverbundes 23 mittels konventioneller Methoden, zum Beispiel in einem Autoklaven unter gleichzeitiger Anwendung von Druck und Temperatur, wobei der Aufbau mit einer Vakuumfolie abgedeckt werden kann.

Alternativ kann auch eine Aushärtung unter atmosphärischem Druck erfolgen. In diesem Fall kann das Werkzeug 14 beispielsweise elektrisch heizbar ausgebildet sein. Um eine gleichmäßige und schnelle Aushärtung des Kernverbundes 23 zu erreichen, kann die obere Deckschicht 22 mit einem der gewünschten äußeren Geometrie des Kernverbundes folgenden, vorzugsweise gleichfalls elektrisch beheizbaren Werkzeug auf den Faltwabenkern 19 gepresst werden.

Der abschließende Verfahrensschritt f) betrifft die Entfernung der Kernfüllmasse 15, 16 aus dem fertigen, ausgehärteten Kernverbund 23, was beispielsweise durch das Auflösen mit einem geeigneten Lösungsmittel oder durch Ausschmelzen erfolgen kann.

Abweichend von der viertelkreisförmigen Querschnittsgeometrie des Werkzeugs 14 kann dieses beispielsweise auch als ein Wickeldorn mit einer in etwa kreisförmigen, elliptischen, ovalen Querschnittsform oder beliebig gekrümmten Querschnittsgeometrie zum Aufwickeln bzw. Ablegen der Deckschichten 13, 22 sowie mindestens eines Faltwabenkerns 19 ausgeführt sein. Grundsätzlich kann das Werkzeug 14 zur Fertigung von plattenförmigen Kernverbunden auch eine ebene Gestalt aufweisen.

Das erfindungsgemäße Verfahren gestattet eine konturgenaue, insbesondere polygonfreie Herstellung von insbesondere einfach oder zweifach gekrümmten Kernverbunden. Grundsätzlich lassen sich komplette Flugzeugrumpfsektionen einstückig mit derartigen Kernverbunden schaffen, bei denen eine zusätzliche Aussteifung mit Stringern und/oder Ringspanten aufgrund der hohen Eigenfestigkeiten des Kernverbundes zumindest abschnittsweise entfallen kann.

Alternativ können auch mindestens zwei Schalensegmente mit Kernverbunden gefertigt werden, die anschließend zu einer vollständigen Rumpfsektion entlang von Längsnähten untereinander verbunden werden.

### Bezugszeichenliste

- 1: Kernverbund
- 2: obere Deckschicht (Kernverbund)
- 3: untere Deckschicht (Kernverbund)
- 4: Faltwabenkern
- 5: Kanal (drainagefähig)
- 6: Kanal (drainagefähig)
- 7: Basislinie
- 8: Basislinie
- 9: Basislinie
- 10: Scheitellinie
- 11: Scheitellinie
- 12: Scheitellinie
- 13: untere Deckschicht (Kernverbund)
- 14: Werkzeug
- 15: Kernfüllmasse
- 16: Kernfüllmasse
- 17: Oberseite (Faltwabenkern)
- 18: Unterseite (Faltwabenkern)
- 19: Faltwabenkern
- 20: Außenkontur (Faltwabenkern)
- 21: Innenkontur (Faltwabenkern)
- 22: obere Deckschicht (Kernverbund)
- 23: Kernverbund

## Patentansprüche

1. Verfahren zur Herstellung eines Kernverbundes (1, 23) mit einem beidseitig mit Deckschichten (2, 3, 13, 22) versehenen Faltwabenkern (4, 19), wobei der Faltwabenkern (4, 19) parallel zu den Deckschichten (2, 3, 13, 22) verlaufende drainagefähige Kanäle (5, 6) aufweist, mit den Schritten:
a) Anordnen einer mit einem nassen Prepreg-Material gebildeten unteren Deckschicht (3, 13) auf einem Werkzeug,
b) zumindest bereichsweises Einbringen einer Kernfüllmasse (15, 16) in den Faltwabenkern (4, 19),
c) Anordnen des mindestens einen Faltwabenkerns (4, 19) auf der unteren Deckschicht (3, 13),
d) Anordnen des Prepreg-Materials auf dem Faltwabenkern (4, 19) zur Schaffung einer oberen Deckschicht (2, 22),
e) Aushärten des gesamten Kernverbundes (4, 19) unter Anwendung von Druck und/oder Temperatur, und
f) Entfernen der Kernfüllmasse (15, 16).

2. Verfahren nach Patentanspruch 1, **dadurch gekennzeichnet, dass** die untere und/oder die obere Deckschicht (2, 3, 13, 22) mit einem Klebemittel mit dem Faltwabenkern (4, 19) zumindest bereichsweise verklebt werden.

3. Verfahren nach Patentanspruch 1 oder 2, **dadurch gekennzeichnet, dass** das Werkzeug (14) ein rotierender Wickeldorn ist, auf dem das Prepreg-Material zur Bildung mindestens einer Deckschicht (2, 3, 13, 22) abgewickelt wird.

4. Verfahren nach einem der Patentansprüche 1 bis 3, **dadurch gekennzeichnet, dass** dem Kernverbund (1, 23) mittels des Werkzeugs (14) eine im Wesentlichen schalensegmentförmige Geometrie, insbesondere für die Herstellung einer Flugzeugrumpfsektion gegeben wird.

5. Verfahren nach einem der Patentansprüche 1 bis 4, **dadurch gekennzeichnet, dass** dem Kernverbund (1, 23) mittels des Wickeldorns eine im Wesentlichen hohlzylindrische Geometrie, insbesondere für eine einstückige Flugzeugrumpfsektion, gegeben wird.

6. Verfahren nach einem der Patentansprüche 1 bis 5, **dadurch gekennzeichnet, dass** als Prepreg-Material ein mit einem aushärtbaren Kunststoffmaterial, insbesondere mit einem Epoxidharz vorimprägniertes Halbzeug mit Verstärkungsfasern, insbesondere Kohlefasern, verwendet wird, wobei das vorimprägnierte Halbzeug erst nach der Verarbeitung, insbesondere dem Abwickeln und/oder Ablegen, ausgehärtet wird.

7. Verfahren nach einem der Patentansprüche 1 bis 6, **dadurch gekennzeichnet, dass** der mindestens eine Faltwabenkern (4, 19) mit einer mit einem aushärtbaren Kunststoffmaterial imprägnierten und mehrfach gefalteten, anfänglich ebenen flächenhaften Verstärkungsanordnung gebildet wird.

8. Verfahren nach einem der Patentansprüche 1 bis 7, **dadurch gekennzeichnet, dass** die Kernfüllmasse (15, 16) durch Schmelzen oder Auflösen mit einem Lösungsmittel aus dem Faltwabenkern (4, 19) entfernt wird.

## Claims

1. Method for manufacturing a core composite (1, 23) having a folded honeycomb core (4, 19) provided on both sides with cover layers (2, 3, 13, 22), wherein the folded honeycomb core (4, 19) has drainage-enabling channels (5, 6) running parallel to the cover layers (2, 3, 13, 22), comprising the steps:
a) arranging a lower cover layer (3, 13) formed with a wet prepreg material on a tool,
b) introducing a core filler material (15, 16) at least in some areas into the folded honeycomb core (4, 19),
c) arranging the at least one folded honeycomb core (4, 19) on the lower cover layer (3, 13),
d) arranging the prepreg material on the folded honeycomb core (4, 19) to provide an upper cover layer (2, 22)
e) hardening the entire core composite (4, 19) by applying pressure and/or temperature, and
f) removing the core filler material (15, 16).

2. Method according to patent claim 1 **characterised in that** the lower and/or upper cover layer (2, 3, 13, 22) are adhered by an adhesive to the folded honeycomb core (4, 19) at least in some areas.

3. Method according to patent claims 1 or 2 **characterised in that** the tool (14) is a rotating winding mandrel on which the prepreg material is wound to form at least a cover layer (2, 3, 13, 22).

4. Method according to one of patent claims 1 to 3 **characterised in that** the core composite (1, 23) is given a substantially shell-segment shaped geometry by means of the tool (14), more particularly for manufacturing an aircraft fuselage section.

5. Method according to one of patent claims 1 to 4 **characterised in that** the core composite (1, 23) is given a substantially hollow cylindrical geometry by means of the winding mandrel, more particularly for a one-piece aircraft fuselage section.

6. Method according to one of patent claims 1 to 5 **characterised in that** as prepreg material is used a semi-finished product pre-impregnated with a curable plastics material, more particularly with an epoxy resin comprising reinforcement fibres, more particularly carbon fibres, wherein the pre-impregnated semi-finished product is only hardened after processing, more particularly after winding and/or placing.

7. Method according to one of patent claims 1 to 6 **characterised in that** the at least one folded honeycomb core (4, 19) is formed with a laminar surface reinforcement arrangement which is impregnated with a curable plastics material and is initially flat and then repeatedly folded.

8. Method according to one of patent claims 1 to 7 **characterised in that** the core filler material (15, 16) is removed from the folded honeycomb core (4, 19) by melting or dissolving with a solvent.

## Revendications

1. Procédé pour la fabrication d'une structure composite de noyau (1, 23) avec un noyau pliable en nid d'abeille (4, 19) pourvu des deux côtés de couches de recouvrement (2, 3, 13, 22), le noyau pliable en nid d'abeille (4, 19) présentant une multitude de canaux capables de drainage (5, 6) parallèlement aux couches de recouvrement (2, 3, 13, 22) avec les étapes :
a) disposition d'une couche de recouvrement inférieure (3, 13) formée avec un matériau préimprégné sur un outil,
b) introduction au moins par endroits d'une masse de remplissage du noyau (15, 16) dans le noyau pliable en nid d'abeille (4, 19),
c) disposition du noyau pliable qui existe au moins (4, 19) sur la couche de recouvrement inférieure (3, 13),
d) disposition du matériau préimprégné sur le noyau pliable en nid d'abeille (4, 19) pour créer une couche de recouvrement supérieure (2, 22),
e) durcissement de l'ensemble de la structure composite de noyau (4, 19) en appliquant de la pression et/ou de la température et
f) enlèvement de la masse de remplissage du noyau (15, 16).

2. Procédé selon la revendication 1, **caractérisé en ce que** la couche de recouvrement inférieure et/ou supérieure (2, 3, 13, 22) est collée au moins par endroits au noyau pliable en nid d'abeille (4, 19) avec une colle.

3. Procédé selon la revendication 1 ou 2, **caractérisé en ce que** l'outil (14) est un noyau d'enroulement rotatif sur lequel le matériau préimprégné est déroulé pour former au moins une couche de recouvrement (2, 3, 13, 22).

4. Procédé selon l'une des revendications 1 à 3, **caractérisé en ce qu'**une géométrie substantiellement en forme de segment de coque est donnée à la structure composite de noyau (1, 23) au moyen de l'outil (14), en particulier pour la fabrication d'une section de fuselage d'avion.

5. Procédé selon l'une des revendications 1 à 4, **caractérisé en ce qu'**une géométrie substantiellement en cylindre creux est donnée au moyen du noyau d'enroulement à la structure composite de noyau (1, 23), en particulier pour une section de fuselage d'avion en une pièce.

6. Procédé selon l'une des revendications 1 à 5, **caractérisé en ce qu'**un produit semi-fini avec des fibres de renforcement, en particulier des fibres de carbone, préimprégné avec une matière plastique durcissable, en particulier avec une résine époxy, est utilisé comme matière préimprégnée, cependant que le produit semi-fini ne se durcit qu'après traitement, en particulier après déroulement et/ou pose.

7. Procédé selon l'une des revendications 1 à 6, **caractérisé en ce que** le noyau pliable en nid d'abeille qui existe au moins (4, 19) est formé avec un arrangement de renforcement en surface, initialement plat, préimprégné avec une matière plastique durcissable et plié plusieurs fois.

8. Procédé selon l'une des revendications 1 à 7, **caractérisé en ce que** la masse de remplissage du noyau (15, 16) est enlevée du noyau pliable en nid d'abeille (4, 19) par fusion ou dissolution avec le solvant.
